# EUROPÄISCHE PATENTSCHRIFT

(11) **EP 1 108 923 B1**
(45) Veröffentlichungstag und Bekanntmachung des Hinweises auf die Patenterteilung: **05.06.2002**
(21) Anmeldenummer: 99122818.0
(22) Anmeldetag: 17.11.1999
(51) Int. Cl.: F16H 61/18

(54) **Schaltvorrichtung für Wechselgetriebe von Kraftfahrzeugen mit einer Rückwärtsgangsperre**
Gear shift device for gearboxes of motor vehicles with reverse gear inhibitor
Dispositif de commande pour boîtes de vitesses de véhicules à moteur avec verrouillage empêchant l'enclenchement de la marche arrière

(43) Veröffentlichungstag der Anmeldung: 20.06.2001
(73) Patentinhaber: Ford Global Technologies, Inc., A subsidiary of Ford Motor Company, Dearborn, Michigan 48126 (US)
(72) Erfinder: Kampmann, Frank, 42489 Wuelfrath (DE); Portas, Michael, 50259 Pulheim (DE)
(74) Vertreter: Messulam, Alec Moses

(56) Entgegenhaltungen:
- EP-A- 0 955 488
- DE-C- 19 511 510
- GB-A- 2 278 653

## Beschreibung

Die Erfindung bezieht sich auf eine Schaltvorrichtung für Wechselgetriebe von Kraftfahrzeugen mit einer Rückwärtsgangsperre der im Oberbegriff des Patentanspruches 1 erläuterten Art.

Aus der GB-A-2 278 653 ist eine Schaltvorrichtung für Wechselgetriebe von Kraftfahrzeugen mit einer Rückwärtsgangsperre bekannt, bei der der Sperranschlag für den Rückwärtsgang an einer entgegen der Kraft einer Feder verlagerbaren Zwischenplatte angeordnet ist und durch bewußte Betätigung am Schalthebel überwindbar ist, um den Rückwärtsgang einzurücken.

Diese bekannte Schaltvorrichtung erfordert wegen des am Eingang des Schaltgehäuses an einer schwenkbeweglichen Zwischenplatte angeordneten Sperranschlages für den Rückwärtsgang einen erheblichen baulichen Aufwand, der die Herstellungskosten einer solchen Schaltvorrichtung erhöht.

Eine weitere Schaltvorrichtung ist aus der EP-A-0 955 488 bekannt, die dem Oberbegriff des Patentanspruches 1 entspricht und bei der die Rückwärtsgangsperre mittels einer feststehenden Zwischenplatte ausgeführt ist. In die Zwischenplatte greift der untere Fortsatz des in einem Kugelgelenk schwenkbar gelagerten Schalthebels. In Richtung der Schalthebelbewegung von 5. Gang zum Rückwärtsgang weist die Zwischenplatte einen Vorsprung auf, so daß diese direkte Schaltmöglichkeit verhindert wird. Beim Schalten von Neutral zum Rückwärtsgang wird dieser Vorsprung umgangen, indem unter Inkaufnahme elastischer Verformungen des Schaltgestänges der untere Fortsatz des Schalthebels in die vorgesehene Rückwärtsgangposition hinter dem Vorsprung gedrückt wird.

Die Rückwärtsgangposition des Schalthebels kann nur bei elastischer Deformation des Schaltgestänges oder der Schaltkabel erreicht werden.

Darüber hinaus sind eine Vielzahl von Schaltvorrichtungen für Wechselgetriebe von Kraftfahrzeuge mit einer Rückwärtsgangschaltsperre bekannt, bei der ein Sperranschlag im Bereich des Eingangs des Schaltgehäuses durch bewußte Handhabung des Schalthebels, z.B. durch anheben oder durch niederdrücken, überwunden werden muß, bevor der Rückwärtsgang eingerückt werden kann.

Alle diese bekannten Schaltvorrichtungen erfordern aufwendige Führungen des Schalthebels mit entsprechenden Federanordnungen.

Die Aufgabe der Erfindung ist es, eine Schaltvorrichtung für Wechselgetriebe von Kraftfahrzeugen mit einer Rückwärtsgangsperre gemäß dem Oberbegriff des Patentanspruches 1 derart zu verbessern, daß mit möglichst geringem Bauaufwand eine zuverlässige Schaltsperre für den Rückwärtsgang bereitgestellt wird, die durch eine entsprechende bewußte Betätigung am Schalthebel überwunden werden kann.

Gemäß der Erfindung wird diese Aufgabe gelöst, indem bei einer Schaltvorrichtung für Wechselgetriebe von Kraftfahrzeugen mit einer Rückwärtsgangsperre der im Oberbegriff des Patentanspruches 1 erläuterten Art, die im Kennzeichenteil des Patentanspruches 1 aufgezeigten Merkmale angewendet werden.

Dadurch, daß der Sperranschlag für den Rückwärtsgang durch einen unmittelbar in den Schaltweg des Rückwärtsganges einragenden Vorsprung an einer Sperrplatte gebildet wird, und die Sperrplatte durch bewußte Betätigung am Schalthebel mittels elastischer Verformung eines Seilzuges oder eines Torsionselementes des Schaltgestänges in eine Lage bringbar ist, in der der Vorsprung den Zugang in die Schaltgasse des Rückwärtsganges freigibt, wird mit einfachen baulichen Maßnahmen eine Rückwärtsgangsperre geschaffen, die nicht nur ein unbeabsichtigtes Durchschalten aus einem Vorwärtsgang, z.B. dem 5. Gang in den Rückwärtsgang verhindert, sondern darüber hinaus bei jedem Einrücken des Rückwärtsganges durch bewußte Betätigung am Schalthebel überwunden werden muß.

Die Erfindung wird anhand einer in den Zeichnungen gezeigten schematischen Ausführungsformen näher erläutert. Es zeigt:
- Fig. 1: eine schematische Draufsicht auf eine Schaltvorrichtung gemäß der Erfindung;
- Fig. 2: eine schematische Abfolge der Betätigung der erfindungsgemäßen Schaltvorrichtungfindung ausgehend von der Schaltgasse des 3. und 4. Ganges zum Einrücken des 5. Ganges und der erforderlichen Überdrückung zum Einrücken des Rückwärtsganges;
- Fig. 3: eine schematische Draufsicht auf eine weitere Ausführungsform der erfindungsgemäßen Schaltvorrichtung in ihrer Sperrstellung und
- Fig. 4: eine schematische Draufsicht der Ausführungsform nach Fig. 3 bei eingerücktem Rückwärtsgang und verschwenkter Sperrplatte.

Bei einer allgemein üblichen Schaltvorrichtung ist in einem Schaltgehäuse ein Schalthebel gelenkig gelagert aufgenommen, wobei ein oberer Handschalthebelteil über einen Kugelabschnitt in einer entsprechenden Kugelpfanne im Schaltungsgehäuse gelenkig gelagert ist und ein unterer Schalthebelteil mit dem entsprechenden Schaltungsgestänge zum Wechselgetriebe hin verbunden ist. Eine solche Schaltvorrichtung ist dem Fachmann hinlänglich bekannt und sie wird daher hier im Detail nicht beschrieben.

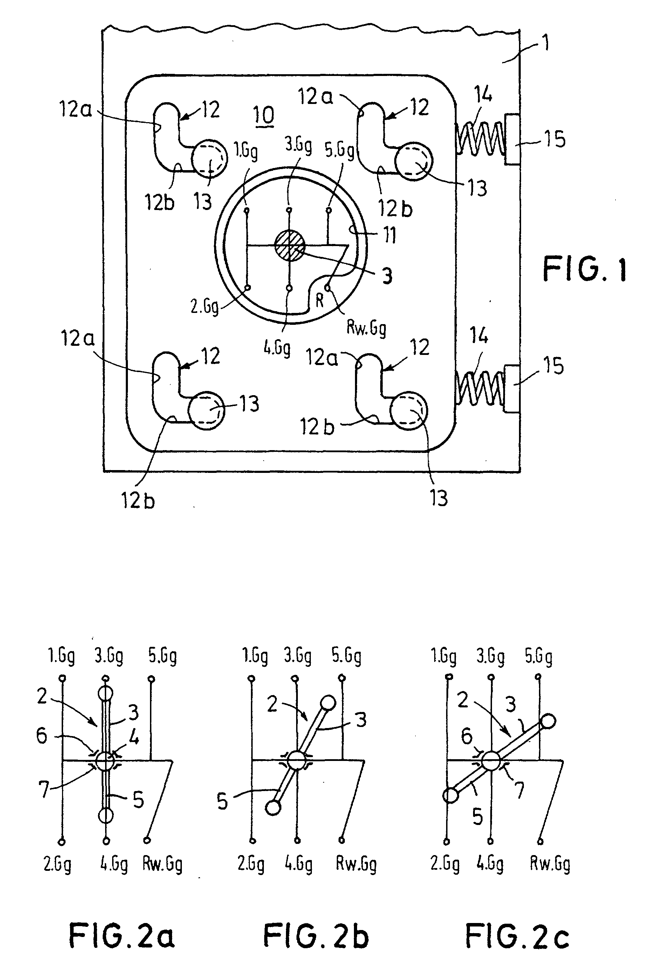

In den Figuren 1 und 2 a ist in einem Schaltgehäuse 1 ein Schalthebel 2 gelenkig gelagert aufgenommen. Der Schalthebel 2 weist hierbei einen oberen Schalthebelteil 3, einen Kugelabschnitt 4 und einen unteren Schalthebelteil 5 auf und der Kugelabschnitt 4 ist in zwei entsprechenden Kugelpfannen 6 und 7, die im Schaltgehäuse 1 aufgenommen sind, in bekannter Weise gelenkig abgestützt.

Am Schaltgehäuse 1 ist in einem Bereich oberhalb des Kugelabschnittes 4 eine Sperrplatte 10 angeordnet, die eine Öffnung 11 aufweist, durch den sich der obere Schalthebelteil erstreckt. Die Öffnung 11 läßt hierbei die Bewegungen in die Schaltpositionen der Vorwärtsgänge ohne Einschränkung zu, in Richtung des Rückwärtsganges weist die Sperrplatte 10 jedoch einen Vorsprung R auf, der das Bewegen des Schalthebelteiles 3 in die Stellung für den Rückwärtsgang nicht ohne weiteres möglich macht.

Gemäß der Erfindung ist die Sperrplatte 10 mit L-förmigen Schlitzen 12 versehen, durch die sich am Schaltgehäuse 1 angeordnete Führungsbolzen 13 (ggf. als Kopfbolzen ausgebildet) erstrecken. Die L-förmigen Schlitze 12 weisen zwei zueinander im wesentlichen rechtwinkelig angeordnete Abschnitte 12 a und 12 b auf, von denen sich der Abschnitt 12 a in Richtung der Schaltgassen und der Abschnitt 12 b in Richtung der Neutralgasse erstreckt.

Die Sperrplatte 10 ist über Federn 14 an Widerlagern 15 am Schaltgehäuse 1 abgestützt.

Bei einer Betätigung des Schalthebels 2 vom 5. Gang kommend in Richtung des Rückwärtsganges, wie in Fig. 2 b dargestellt, ist ein Erreichen der Stellung für den Rückwärtsgang durch den Vorsprung R nicht möglich, da bei einem Zusammentreffen des Schalthebelteiles 3 mit dem Vorsprung R eine Verlagerung der Sperrplatte 10 durch den entlang der Neutralgasse verlaufenden Abschnitt 12 b der L-förmigen Schlitze 12 verhindert wird. Erst wenn der Schalthebelteil 3, wie aus Fig. 2 c ersichtlich, so weit nach rechts außen überdrückt wird, daß er gegen die Öffnung 11 anliegt, kann er die Sperrplatte 10 entgegen der Kraft der Federn 14 nach rechts verlagern und darauffolgend die Sperrplatte in Richtung der Abschnitte 12 a der L-förmigen Schlitze 12 weiterbewegen, wodurch er in die Schaltposition für den Rückwärtsgang gelangt.

Damit ist somit ein unbeabsichtigtes Einrücken des Rückwärtsganges nachfolgend eines Betriebes des Wechselgetriebes im 5. Gang nicht mehr zu befürchten.

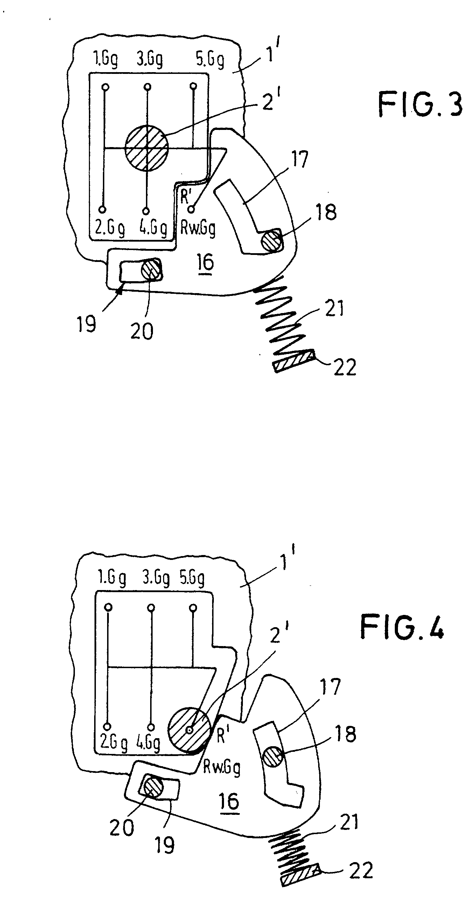

In der Figur 3 ist eine weitere Ausführungsform der erfindungsgemäßen Schaltvorrichtung mit einer Rückwärtsgangsperre gezeigt, wobei hier an einem Schaltgehäuse 1' mit einem Schalthebel 2' eine Sperrplatte 16 angeordnet ist, die den Schalthebelteil 3 nicht umfaßt sondern seitlich nur im Bereich der Schaltstellung für den Rückwärtsgang angeordnet ist. Der obere Schalthebelteil 3 kann wieder eine Vorwähl- und Schaltbewegung entsprechend dem aufgezeigten Schaltschema durchführen und die Sperrplatte 16 weist wieder einen Vorsprung R' auf und zumindest einen L-Schlitz 17, der mit einem Führungsbolzen 18 zusammenwirkt. Darüber hinaus ist ein weiterer Längsschlitz 19 mit einem Führungsbolzen 20 vorgesehen. Die Sperrplatte 16 wird über eine Feder 21 belastet, die sich an einem Widerlager 22 am Schaltgehäuse 1' abstützt.

Auch hier ist wieder eine unmittelbare Schaltbewegung vom 5. Gang in Richtung des Rückwärtsganges durch den Vorsprung R' verhindert, da sich der Führungsbolzen 18 in dem sich im wesentlichen in der Neutralgasse verlaufenden Abschnitt des L-förmigen Schlitzes 17 befindet. Erst durch bewußtes Überdrükken des Schalthebels 2', wie in Fig. 4 dargestellt, der hierbei auf einen Teil der Sperrplatte 16 einwirkt, kann die Sperrplatte 16 so verlagert werden, daß der Führungsbolzen 18 aus dem unteren Abschnitt des L-förmigen Schlitzes 17 heraustritt und nachfolgend durch Verschwenken der Sperrplatte 16 um den Führungsbolzen 20 ein Einlegen des Rückwärtsganges ermöglicht wird.

Es ist leicht ersichtlich, daß mit den beiden vorgeschlagenen Ausführungsformen zuverlässig eine unerwünschte unbeabsichtigte Rückschaltung aus dem 5. Gang in den Rückwärtsgang verhindert werden kann, daß jedoch mit einfachen Mitteln bei bewußten Überdrücken des Schalthebelteiles 3 in der Neutralgasse in Richtung auf den Rückwärtsgang der Rückwärtsgang jederzeit bewußt eingelegt werden kann.

## Patentansprüche

1. Schaltvorrichtung für Wechselgetriebe von Kraftfahrzeugen mit einer Rückwärtsgangsperre,
- mit einem in einem Schaltgehäuse (1) über ein Kugelgelenk (4) schwenkbar gelagerten Schalthebel (2), der zur Vorwahl von Schaltgassen seitlich und zum Einrücken der Gänge nach vom und nach hinten schwenkbar ist,
- wobei ein ober- oder unterhalb des Kugelgelenkes (4) wirkender Schalthebelteil (3, 5) des Schalthebels mit einer am Eingang des Schaltgehäuses (1) angeordneten Sperrplatte (10; 16) mit einem Sperranschlag für den Rückwärtsgang zusammenwirkt, der durch bewußte Betätigung am Schalthebel (2) zum Einrücken des Rückwärtsganges überwindbar ist, und
- wobei der Sperranschlag für den Rückwärtsgang durch einen an der Sperrplatte (10; 16) vorgesehenen und in den Schaltweg des Rückwärtsganges einragenden Vorsprung (R) ausgebildet ist,
**dadurch gekennzeichnet, daß**
- die Sperrplatte verschiebbar angeordnet ist und durch Verlagerung entgegen der Kraft zumindest einer Feder (14; 21) entlang zumindest eines L-förmigen Schlitzes (12; 17), der mit zumindest einem am Schaltgehäuse (1) feststehenden Bolzen (13; 18) zusammenwirkt, in eine Lage gebracht wird, in der der einragende Vorsprung (R) den Einrückweg für den Rückwärtsgang freigibt.

2. Schaltvorrichtung für Wechselgetriebe von Kraftfahrzeugen mit einer Rückwärtsgangsperre nach Anspruch 1,
**dadurch gekennzeichnet, daß**
die Sperrplatte (10) am Schaltgehäuse über vier Bolzen (13) und vier L-förmige Schlitze (12) zunächst seitlich entgegen der Kraft von zwei Federn (14) und dann nach hinten verlagerbar geführt ist.

3. Schaltvorrichtung für Wechselgetriebe von Kraftfahrzeugen mit einer Rückwärtsgangsperre nach Anspruch 1,
**dadurch gekennzeichnet, daß**
die Sperrplatte (16) am Schaltgehäuse über zwei Bolzen (18 und 20) und einen L-förmige Schlitz (17) und einen bogenförmigen Schlitz (19) zunächst seitlich und dann nach hinten entgegen der Kraft der Feder (21), die schräg angeordnet ist, verschwenkbarbar geführt ist.

## Claims

1. Gear shift device for gearboxes of motor vehicles with reverse gear inhibitor,
- with a gear lever (2) positioned in a swivelling way via a ball-and-socket joint (4) in gear casing (1), wherein this gear lever (2) can be swivelled laterally for the pre-selection of switching paths and forwards and backwards for engaging the gears,
- wherein a gear lever component (3, 5) of the gear lever working above or below the ball-and-socket joint (4) with an inhibitor plate (10; 16) positioned at the input of the gear casing works together with an inhibitor stop for the reverse gear, which can be overcome through deliberate activation on the gear lever (2) for engaging the reverse gear, and
- wherein the inhibitor stop for the reverse gear is formed through a shoulder (R) provided on the inhibitor plate (10; 16) and projecting into the switching path of the reverse gear,
**characterised in that**
- the inhibitor plate is positioned in a displaceable way and, through shifting contrary to the force of at least one spring (14; 21) along at least one L-shaped recess (12; 17), which works together with at least one bolt (13; 18) fixed on the gear casing (1), is brought into a position in which the projecting shoulder (R) releases the engagement path for the reverse gear.

2. Gear shift device for gearboxes of motor vehicles with reverse gear inhibitor according to Claim 1
**characterised in that**
the inhibitor plate (10) on the gear casing via four bolts (13) and four L-shaped recesses (12) is guided in a displaceable way firstly laterally contrary to the force of two springs (14) and then backwards.

3. Gear shift device for gearboxes of motor vehicles with reverse gear inhibitor according to Claim 1
**characterised in that**
the inhibitor plate (16) on the gear casing via two bolts (18 and 20) and an L-shaped recess (17) and an arched recess (19) is guided in a swivelling way firstly laterally and then backwards contrary to the force of the spring (21) which is positioned slanting.

## Revendications

1. Dispositif de changement de vitesses pour une boîte de vitesses de véhicules avec un blocage de marche arrière,
- avec un levier de changement de vitesse (2) placé dans un boîtier de boîte de vitesses (1) de façon pivotante à l'aide d'un joint sphérique (4), levier qui est pivotant latéralement pour la sélection des voies de passage de vitesses et déplaçable vers l'avant et vers l'arrière pour le passage des vitesses,
- une partie (3, 5) du levier de changement de vitesses agissant au-dessus ou en-dessous du joint sphérique (4) coopérant avec une plaque de blocage (10, 16) placée à l'entrée du boîtier de la boîte de vitesses (1) avec une butée de blocage de la marche arrière, et qui est surmontable par une manoeuvre voulue du levier de changement de vitesses (2) pour le passage en marche arrière, et
- la butée de blocage de la marche arrière étant prévue par une plaque de blocage (10, 16) et étant formée par une saillie (R) dépassant dans le passage de la marche arrière,
**caractérisé en ce que** la plaque de blocage est placée de façon déplaçable et est amenée dans une position, dans laquelle la saillie (R) dépassant libère le passage de la marche arrière, par le déplacement contre la force d'au moins un ressort (14, 21) le long d'au moins une fente (12, 17) en forme de L, qui agit au moins avec un goujon (13, 18) placé de façon fixe sur le boîtier de la boîte de vitesses (1).

2. Dispositif de changement de vitesses pour une boîte de vitesses de véhicules avec un blocage de marche arrière selon la revendication 1, **caractérisé en ce que** la plaque de blocage (10) est guidée de façon déplaçable sur le boîtier de la boîte de vitesses à l'aide de quatre goujons (13) et de quatre fentes en forme de L (12), d'abord latéralement contre la force de deux ressorts (14), puis ensuite vers l'arrière.

3. Dispositif de changement de vitesses pour une boîte de vitesses de véhicules avec un blocage de marche arrière selon la revendication 1, **caractérisé en ce que** la plaque de blocage (16) est guidée de façon pivotante sur le boîtier de la boîte de vitesses à l'aide de deux goujons (18 et 20) et d'une fente en forme de L (17) et d'une fente arquée (19), d'abord latéralement puis vers l'arrière contre la force du ressort (21) placé de façon inclinée.
